# EUROPEAN PATENT SPECIFICATION

(11) **EP 4 546 476 B1**
(45) Date of publication and mention of the grant of the patent: **25.11.2026**
(21) Application number: 23903975.3
(22) Date of filing: 12.12.2023
(51) Int. Cl.: H01M 10/04, H01M 10/0587

(54) **CARRIER**
TRÄGER
SUPPORT

(30) Priority: 13.12.2022 KR 20220174176
(43) Date of publication of application: 30.04.2025
(73) Proprietor: LG Energy Solution, Ltd., Seoul 07335 (KR)
(72) Inventor: LEE, Ju-Ho, Daejeon 34122 (KR); KIM, Min-Tae, Daejeon 34122 (KR); LEE, Gil-Young, Daejeon 34122 (KR)
(74) Representative: Goddar, Heinz J.
(86) International application number: PCT/KR2023/020477
(87) International publication number: WO 2024/128774

(56) References cited:
- CN-A- 111 547 353
- CN-A- 111 547 353
- CN-U- 212 607 444
- JP-A- 2006 137 602
- JP-A- 2012 062 195
- KR-A- 20160 075 743
- KR-A- 20220 084 517
- KR-A- 20220 084 518

## Description

### TECHNICAL FIELD

The present disclosure relates to a carrier. More specifically, the present disclosure relates to a carrier for supporting and/or transferring an electrode assembly of a battery cell.

The present application claims priority to Korean Patent Application No. 10-2022-0174176 filed on December 13, 2022 in the Republic of Korea.

### BACKGROUND ART

Secondary batteries have high applicability according to product groups and electrical characteristics such as high energy density, and thus are commonly applied not only to portable devices but also to electric vehicles (EVs) or hybrid electric vehicles (HEVs) driven by electric power sources. Such secondary batteries are attracting attention as a new energy source to improve eco-friendliness and energy efficiency in that it has not only a primary advantage of dramatically reducing the use of fossil fuels, but also no by-products generated from the use of energy.

Secondary batteries widely used at present include lithium-ion batteries, lithium polymer batteries, nickel cadmium batteries, nickel hydrogen batteries, nickel zinc batteries, and the like. An operating voltage of the unit secondary battery cell, namely a unit battery cell, is about 2.5 V to 4.5 V. Therefore, if a higher output voltage is required, a plurality of battery cells may be connected in series to configure a battery pack. In addition, depending on the charge/discharge capacity required for the battery pack, a plurality of battery cells may be connected in parallel to configure a battery pack. Thus, the number of battery cells included in the battery pack may be variously set according to the required output voltage and/or the demanded charge/discharge capacity.

Meanwhile, the conventional electrode assembly carrier included a component called an insert ring. The insert ring is a component required for the taping process and the electrode assembly insertion process. However, in a carrier including such an insert ring, the number of equipment units for raising/lowering the insert ring during the taping process has been increased, thereby leading to a problem in that abnormal seating of the insert ring occurs when it is raised/lowered. This occasionally caused equipment floating and/or process issues.

Also, when the insert ring was not properly seated in the process of seating the insert ring inside the carrier after a 180-degree rotation, there was a problem of abnormal seating of the electrode assembly, such as tilting and/or jamming.

In addition, when the insert ring inside the carrier deviated during the rotary process, there was also a problem of causing issues in the process progress.

Also, the insert ring was an operational management point required to be managed during cleaning and wear, which has also been a problem in terms of operation.

Prior art relevant to the present invention is given by JP 2006 137602 A, JP 2012 062195 A and CN 111 547 353 A. It is known from the prior art to provide a core for the winder for shaping the laminated body for the cylindrical battery the core comprising a shaft-like core body provided with a clearance for mounting the laminated body, and a flange part for holding the core body. In the method of shaping the laminated body, the center part of the core body is provided with a through hole, and an inner core is inserted from one side of the through hole. The end part surface of the laminated body mounted in the clearance is held by the inner core to form the laminated body in spiral shape.

### DISCLOSURE

### Technical Problem

Therefore, the present disclosure is directed to enabling to perform a taping winding process and two processes, such as an electrode assembly insertion process and a battery housing insertion process, while removing the insert ring that is a management point of the carrier.

Specifically, it is another object of the present disclosure to achieve structural simplification and process simplification by using a pin carrier type compared to an insert ring carrier having a double structure.

In another aspect of the present disclosure, it is still another object of the present disclosure to improve the causes of the abnormal seating and deviation during the process of the insert ring, which cause equipment floating and process issues, by removing the insert ring from the carrier.

However, technical problems to be solved by the present disclosure are not limited to the above-described problems, and other problems not mentioned herein may be clearly understood by those skilled in the art from the following description of the present disclosure.

### Technical Solution

The present invention is defined according to the subject matter of the appended independent claims. Particular embodiments are given by the additional features of the appended dependent claims. A carrier according to an embodiment of the present invention for solving the above-described problem includes a center pin that is configured to penetrate the winding center hole of the electrode assembly defining a core and an outer circumferential surface by winding the first and second electrodes and the separator interposed therebetween around a winding axis, and extends in a direction parallel to the winding axis of the electrode assembly; a support located below the center pin and configured to support the electrode assembly from below; and a base located below the support and including at least one pair of bearings configured to be rotatable on a flat surface perpendicular to the winding axis.

Preferably, the base may be configured to rotate the support.

In one aspect of the present disclosure, the carrier may include no insert ring.

In another aspect of the present disclosure, the length of the center pin may be smaller than or equal to the length of the electrode assembly in the winding axis direction.

In another aspect of the present disclosure, the center pin may have a shape in which its radius decreases toward the end.

In another aspect of the present disclosure, the support may support a current collector coupled to one side of the electrode assembly.

Here, the current collector may include a support portion disposed on one side of the electrode assembly; a tab coupling portion extending from the support portion and coupled to a first uncoated portion of the electrode assembly; and a housing coupling portion extending from the support portion and configured to be electrically coupled to the inner surface of the battery housing.

Preferably, the housing coupling portion may include a contact portion coupled to the inner surface of the battery housing; and a connection portion connecting the support portion and the contact portion.

Preferably, the connection portion may have a unilaterally convex structure based on an imaginary straight line connecting both ends of the connection portion in the length direction.

In another aspect of the present disclosure, the connection portion may have a shape in which its slope gradationally or gradually decreases toward the contact portion.

In still another aspect of the present disclosure, the support may be configured such that its radius increases as it moves away from the electrode assembly.

For example, the shape of the support may be configured to match the shape of the connection portion of the current collector.

In one aspect of the present disclosure, the diameter of the support may be configured to be larger than the diameter of the winding center hole provided in the core of the electrode assembly.

In another aspect of the present disclosure, the diameter of the support may be configured to be larger than the diameter of the current collector hole formed in the center of the current collector.

### Advantageous Effects

According to the present disclosure, the support and rotation process of the electrode assembly is made possible by a carrier that does not include an insert ring.

In addition, the taping process may be performed smoothly by the structure including a bearing inside the base of the carrier.

Ultimately, the insert ring is not required during the rotation process when the electrode assembly is inserted into the battery housing. Accordingly, it is possible to fundamentally prevent the problem of tilting the electrode assembly due to abnormal seating of the insert ring during transfer of the electrode assembly and seating of the insert ring. Furthermore, equipment design and structural simplification may be achieved by removing the insert ring, and operational management points may be eliminated.

In addition, by allowing the carrier to rotate smoothly through the addition of a bearing, it is possible to eliminate the cause of issues related to the winding progress of the taping process.

However, effects to be obtained by the present disclosure are not limited to the above-described effects, and other technical effects not mentioned herein may be clearly understood by those skilled in the art from the following description of the present disclosure.

### DESCRIPTION OF DRAWINGS

The accompanying drawings illustrate a preferred embodiment of the present disclosure and together with the foregoing disclosure, serve to provide further understanding of the technical features of the present disclosure, and thus the present disclosure is not construed as being limited to the drawing.
FIG. 1 is a view for describing a battery cell according to an embodiment of the present disclosure.
FIG. 2 is a view for describing a current collector included in a battery cell according to an embodiment of the present disclosure.
FIG. 3 is a view for describing a coupling form of an electrode assembly and a current collector according to an embodiment of the present disclosure.
FIG. 4 is a view for describing how a current collector according to an embodiment of the present disclosure is coupled to one side of an electrode assembly.
FIG. 5 is a view for describing a carrier according to an embodiment of the present disclosure.
FIG. 6 is a view for describing the process of mounting an electrode assembly and a current collector on a carrier according to an embodiment of the present disclosure.
FIG. 7 is a view for describing a state in which an electrode assembly and a current collector are mounted on a carrier according to an embodiment of the present disclosure.
FIG. 8 is a view for describing in detail how a carrier according to an embodiment of the present disclosure supports an electrode assembly and a current collector.
FIG. 9 is a view for describing how a carrier according to an embodiment of the present disclosure rotates an electrode assembly and a current collector.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

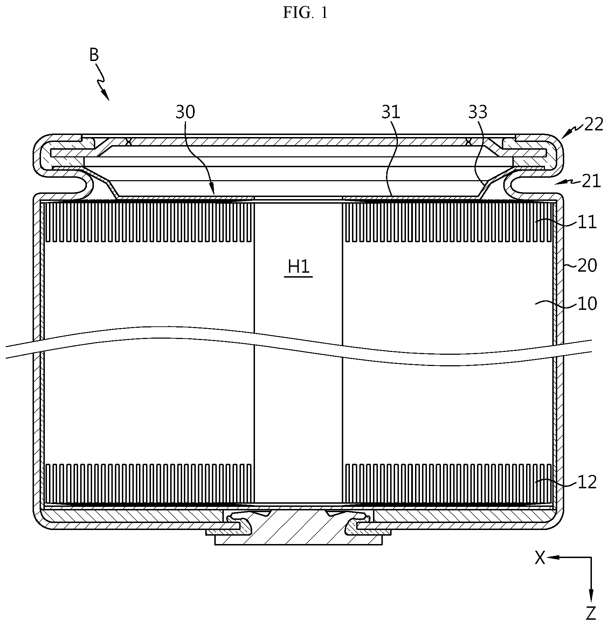

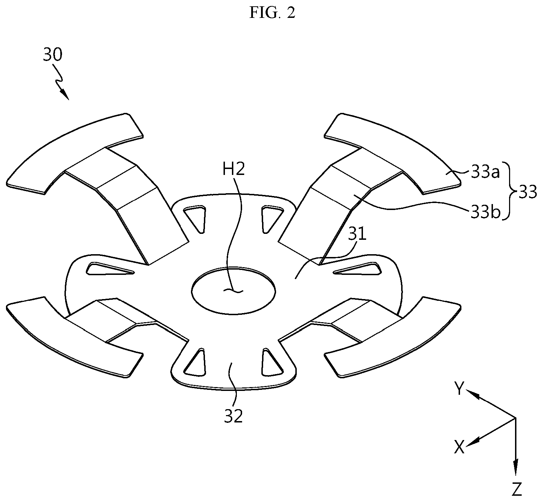

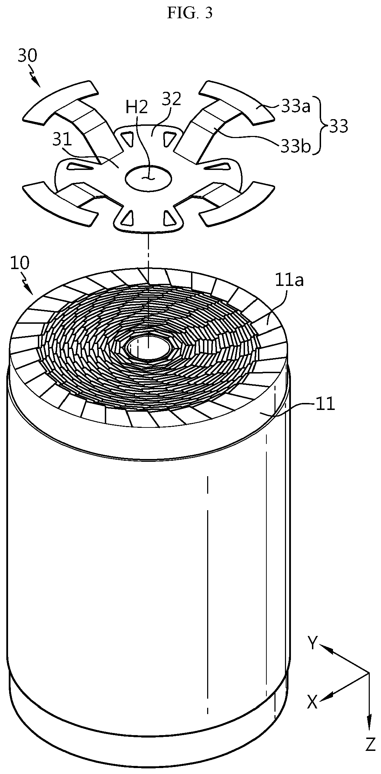

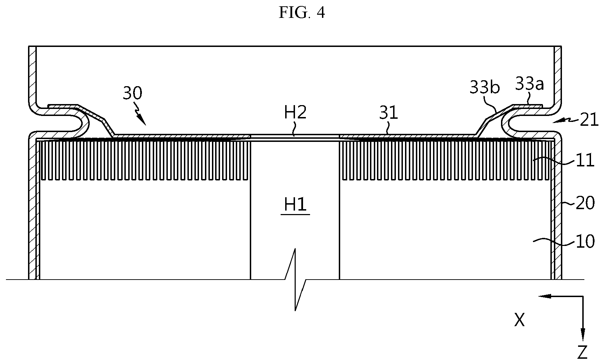

FIG. 1 is a view for describing a battery cell B according to an embodiment of the present disclosure, and FIG. 2 is a view for describing a current collector 30 included in a battery cell B according to an embodiment of the present disclosure. FIG. 3 is a view for describing a coupling form of an electrode assembly 10 and a current collector 30 according to an embodiment of the present disclosure, and FIG. 4 is a view for describing how a current collector 30 according to an embodiment of the present disclosure is coupled to one side of an electrode assembly 10.

Referring to FIG. 1, the battery cell B according to an embodiment of the present disclosure may include an electrode assembly 10, a battery housing 20, and a current collector 30. On the other hand, the present disclosure is not limited by the shape of the battery cell B.

The electrode assembly 10 includes a first uncoated portion 11 and a second uncoated portion 12. More specifically, the electrode assembly 10 has a structure in which the first electrode and the second electrode, with a separator interposed between them, and the separator interposed therebetween are wound around the winding axis to define a core and an outer circumferential surface. That is, the electrode assembly 10 applied to the present disclosure may be a jelly-roll type electrode assembly 10. In this case, an additional separator may also be provided on the outer circumferential surface of the electrode assembly 10 for insulation from the battery housing 20. Without limitation, the electrode assembly 10 may have a winding structure well known in the art.

The first electrode includes a first electrode current collector and a first electrode active material applied to one side or both sides of the first electrode current collector. At one end of the first electrode in the width direction (a direction parallel to the height direction of the cylindrical battery cell B shown in FIG. 1), there is an uncoated portion to which the first electrode active material is not applied. That is, the first electrode includes an uncoated portion that is not coated with an active material at its long side end along the winding direction and is exposed to the outside of the separator. The uncoated portion functioning as the first electrode tab will be referred to hereinafter as the first uncoated portion 11. The first uncoated portion 11 is provided at the top in the height direction of the electrode assembly 10 accommodated in the battery housing 20 (a direction parallel to the height direction of the cylindrical battery cell B shown in FIG. 1). That is, the first electrode includes the first uncoated portion 11 that is not coated with an active material layer at its long side end and is exposed to the outside of the separator, and at least a part of the first uncoated portion 11 is itself used as an electrode tab. The first uncoated portion 11 may be, for example, a negative electrode tab.

Meanwhile, at least a part of the first uncoated portion 11 may include a plurality of segment pieces divided along the winding direction of the electrode assembly 10. In this case, the plurality of segment pieces 11a may be bent along the radial direction of the electrode assembly 10.

Referring to FIGS. 3 and 4 together with FIG. 1, the plurality of segment pieces 11a of the bent first uncoated portion 11 may be overlapped in multiple layers to form a bent surface. In this case, the tab coupling portion 32 of the current collector 30 to be described later may be coupled on the bent surface. The tab coupling portion 32 may be coupled to an area where the plurality of segment pieces are overlapped in multiple layers. In this case, welding for a predetermined area may be performed while the tab coupling portion 32 is seated on the bent surface of the first uncoated portion 11. That is, the tab coupling portion 32 may be coupled to an area where the plurality of segment pieces of the first uncoated portion 11 are overlapped in multiple layers.

The second electrode includes a second electrode current collector and a second electrode active material applied to one side or both sides of the second electrode current collector. At the other end of the second electrode in the width direction (a direction parallel to the height direction of the cylindrical battery cell B shown in FIG. 1), there is an uncoated portion to which the second electrode active material is not applied. That is, the second electrode includes an uncoated portion that is not coated with an active material at its long side end along the winding direction and is exposed to the outside of the separator. The uncoated portion functioning as the second electrode tab will be referred to hereinafter as the second uncoated portion 12. The second uncoated portion 12 is provided at the bottom in the height direction of the electrode assembly 10 accommodated in the battery housing 20. That is, the second electrode includes the second uncoated portion 12 that is not coated with an active material layer at its long side end and is exposed to the outside of the separator, and at least a part of the second uncoated portion 12 is itself used as an electrode tab. The second uncoated portion 12 may be, for example, a positive electrode tab.

Meanwhile, at least a part of the second uncoated portion 12 may include a plurality of segment pieces divided along the winding direction of the electrode assembly 10. In this case, the plurality of segment pieces may be bent along the radial direction of the electrode assembly 10. Referring to FIG. 1, the plurality of segment pieces of the bent second uncoated portion 12 may be overlapped in multiple layers to form a bent surface. In this case, the second current collector 30 to be described later may be coupled on the bent surface.

On the other hand, in the present disclosure, the positive electrode active material coated on the positive electrode plate and the negative electrode active material coated on the negative electrode plate may be used without limitation so long as it is an active material known in the art.

Referring to FIGS. 1 and 4, the battery housing 20 is an approximately cylindrical receptor having an opening formed on one side and made of a metal material having conductivity. The side of the battery housing 20 and the bottom (the lower side based on FIG. 1) located on the opposite side of the opening are generally formed integrally. That is, it is common that the battery housing 20 is open at the upper end in the height direction and closed at the lower end. The lower side of the battery housing 20 may have an approximately flat shape. The battery housing 20 accommodates the electrode assembly 10 through an opening formed at one side thereof in the height direction (a direction parallel to the Z-axis). The battery housing 20 may also accommodate an electrolyte through the opening.

The battery housing 20 may include a beading portion 21 formed at an end adjacent to the opening provided at the upper end of the battery housing 20. The battery housing 20 may further include a clamping portion 22 formed on the beading portion 21. The beading portion 21 has a shape in which the circumference of the outer circumferential surface of the battery housing 20 is recessed to a predetermined depth. More specifically, the beading portion 21 may have an inwardly recessed shape in the area between an opening formed on one side of the battery housing 20 and a receiving portion accommodating the electrode assembly 10.

The beading portion 21 may provide a support surface where at least a part of the edge circumference of the current collector 30 to be described later may be seated and coupled. That is, at least a part of the edge circumference of the current collector 30 of the present disclosure may be seated on the upper surface of the upper beading portion 21. In order to stably support at least a part of the edge circumference of the current collector 30, the upper surface of the upper beading portion 21 may have a shape extending along a direction approximately parallel to the lower surface of the battery housing 20, that is, along a direction approximately perpendicular to the side wall of the battery housing 20. Referring to FIG. 4 together with FIG. 1, the beading portion 21 may function as a support portion for securing the contact portion 33a of the current collector 30.

Referring to FIG. 1 again, the clamping portion 22 is formed on the upper part of the beading portion 21. The clamping portion 22 has an extended and bent shape to surround the edge circumference of the housing cover disposed on the upper part of the beading portion 21. The housing cover is secured on the beading portion 21 by this shape of the clamping portion 22.

Next, the current collector 30 according to an embodiment of the present disclosure will be described in detail with reference to FIGS. 1 to 4.

First, referring to FIG. 1, the current collector 30 according to an embodiment of the present disclosure is accommodated inside the battery housing 20, is electrically connected to the electrode assembly 10, and is also connected to the battery housing 20. That is, the current collector 30 provides an electrical connection between the electrode assembly 10 and the battery housing 20.

Referring to FIG. 2, the current collector 30 includes a support portion 31 disposed on one side of the electrode assembly 10, a tab coupling portion 32 extending from the support portion 31 and coupled to the uncoated portion of the electrode assembly 10, and a housing coupling portion 33 extending from the support portion 31 and configured to be electrically coupled to the inner surface of the battery housing 20.

The tab coupling portion 32 and the first housing coupling portion 33 are indirectly connected through the support portion 31 and are not directly connected to each other. Therefore, when an external impact is applied to the cylindrical battery cell B of the present disclosure, the possibility of damage to the coupling portion between the current collector 30 and the electrode assembly 10 and the coupling portion between the current collector 30 and the battery housing 20 may be minimized. At least one of the tab coupling portion 32 and/or the first housing coupling portion 33 may be provided. At least one tab coupling portion 32 and at least one first housing coupling portion 33 may be disposed, for example, approximately in a radial shape, a cross shape, or a combination thereof, based on the center of the current collector 30. In another aspect, each of the plurality of first housing coupling portions 33 may be disposed between tab coupling portions 32 adjacent to each other.

The support portion 31 and the plurality of tab coupling portions 32 may be disposed on one side of the electrode assembly 10. For example, referring to FIG. 1, the support portion 31 and the plurality of tab coupling portions 32 may be disposed on the upper part of the electrode assembly 10. The tab coupling portion 32 is coupled to the first uncoated portion 11 of the electrode assembly 10. The tab coupling portion 32 may be coupled to the first uncoated portion 11 along the radial direction of the electrode assembly 10, for example by welding. For example, the tab coupling portion 32 may be welded and coupled to the first uncoated portion 11 in a state approximately parallel to the lower surface of the battery housing 20.

Meanwhile, not only the tab coupling portion 32 but also the support portion 31 may be coupled to the first uncoated portion 11. The tab coupling portion 32 and the first uncoated portion 11 may be coupled by welding. The support portion 31 and the tab coupling portion 32 may be located lower than the beading portion 21 when the beading portion 21 is formed in the battery housing 20.

The support portion 31 may include a current collector hole H2 formed at a position corresponding to a winding center hole H1 formed approximately in the center of the electrode assembly 10. The winding center hole H1 and the current collector hole H2 that communicate with each other may function as a passage for the insertion of a welding rod for welding between the terminal of the battery and the second current collector 30 or between the terminal and the lead tab or for the irradiation of a laser beam.

The plurality of first housing coupling portions 33 may have a shape extending approximately radially from the support portion 31 of the current collector 30 toward the side wall of the battery housing 20. Each of the plurality of first housing coupling portions 33 may be located being spaced apart from each other along the circumference of the support portion 31. At least one first housing coupling portion 33 may be located between neighboring tab coupling portions 32. The plurality of first housing coupling portions 33 may be coupled to the inner surface of the battery housing 20, for example, to the beading portion 21. The first housing coupling portions 33 may be particularly coupled to the upper surface of the beading potion 21. **In** the cylindrical battery cell B of the present disclosure, when this structure is applied, the first housing coupling portion 33 may be naturally seated on the beading portion 21 through a process of accommodating the electrode assembly 10 with the current collector 30 coupled thereto within the battery housing 20. Therefore, the welding process of the battery housing 20 and the current collector 30 may be proceeded easily. The welding for coupling the battery housing 20 and the current collector 30 may be applied, for example, by laser welding, ultrasonic welding, or spot welding.

In one aspect of the present disclosure, referring to FIG. 2, the first housing coupling portion 33 may include a contact portion 33a coupled to the inner surface of the battery housing 20 and a first connection portion 33b connecting the support portion 31 and the contact portion 33a. The first connection portion 33b and the contact portion 33a may have substantially the same width along the extension direction. The first tab coupling portion 32 may have a larger width than the first connection portion 33b. The contact portion 33a may have a larger width than the first connection portion 33b.

The contact portion 33a is coupled to the inner surface of the battery housing 20. When the beading portion 21 is formed in the battery housing 20, the contact portion 33a may be coupled to the beading portion 21 as described above. In this case, as described above, both the beading portion 21 and the contact portion 33a may have a shape extending along a direction approximately parallel to the lower surface of the battery housing 20, that is, approximately perpendicular to the side wall of the battery housing 20 for stable contact and coupling.

In one aspect of the present disclosure, referring to FIGS. 1 to 4, the connection portion 33b before the sizing process may have a unilaterally convex structure based on an imaginary straight line connecting a connection point between the contact portion 33a and the connection portion 33b and a connection point between the connection portion 33b and the tab coupling portion 32, that is, an imaginary straight line connecting both ends of the connection portion 33b in the length direction. For example, the connection portion 33b before the sizing process may have an upwardly convex structure based on an imaginary straight line connecting a connection point between the contact portion 33a and the connection portion 33b and a connection point between the connection portion 33b and the tab coupling portion 32, that is, an imaginary straight line connecting both ends of the connection portion 33b in the length direction.

Therefore, preferably, as shown in FIG. 4, the slope of the connection portion 33b is not constant and the slope in the upper area may be smaller than the slope in the lower area based on a predetermined point. The predetermined point may be located above the midpoint of the connection portion 33b. Alternatively, the connection portion 33b may have an upwardly convex shape based on an imaginary straight line connecting the tab coupling portion 32 and the contact portion 33a. In addition, the slope of the connection portion 33b may gradationally or gradually decrease as the connection portion 33b moves toward the contact portion 33a.

Hereinafter, a carrier 1 capable of supporting and/or transferring and/or rotating the electrode assembly 10 and the current collector 30 included in the battery cell B will be described.

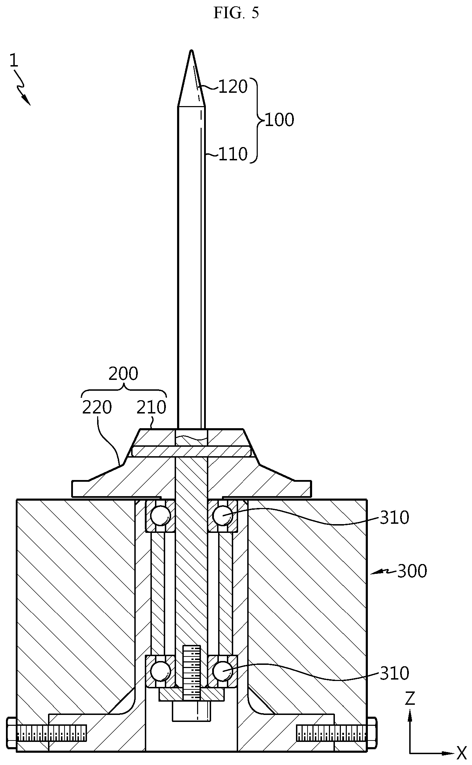

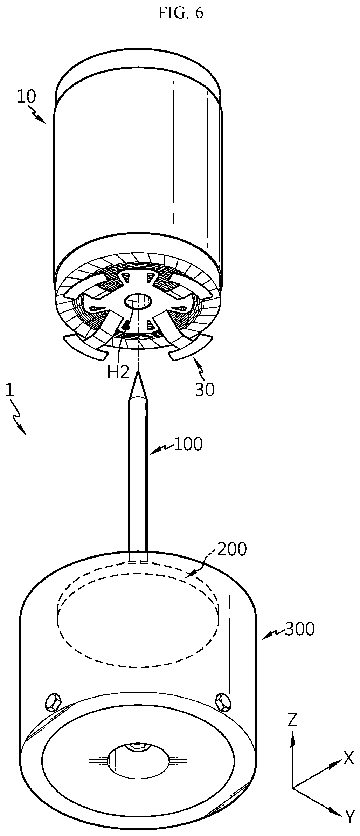

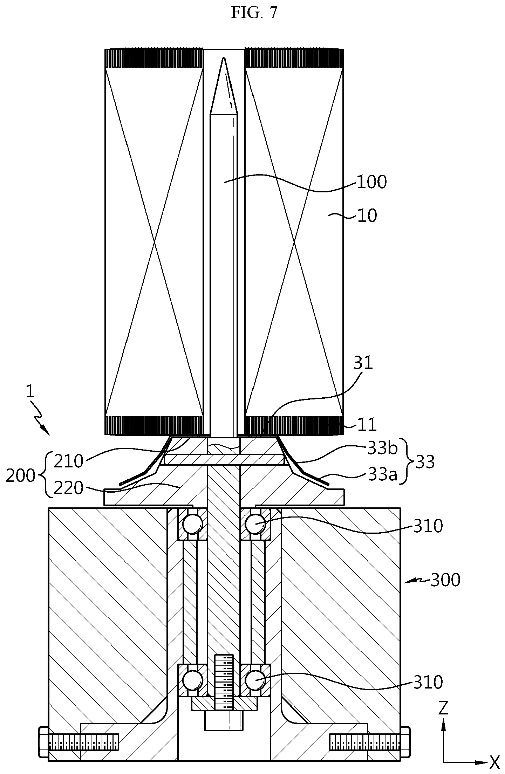

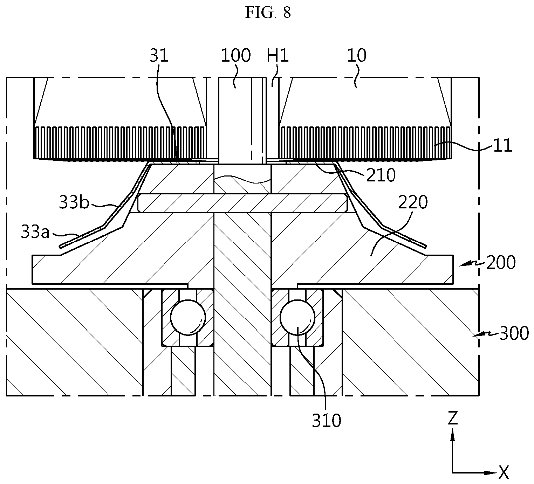

FIG. 5 is a view for describing a carrier 1 according to an embodiment of the present disclosure, and FIG. 6 is a view for describing the process of mounting an electrode assembly 10 and a current collector 30 on a carrier 1 according to an embodiment of the present disclosure. FIG. 7 is a view for describing a state in which an electrode assembly 10 and a current collector 30 are mounted on a carrier 1 according to an embodiment of the present disclosure, and FIG. 8 is a view for describing in detail how a carrier 1 according to an embodiment of the present disclosure supports an electrode assembly 10 and a current collector 30.

Referring to FIG. 5, the carrier 1 includes a center pin 100, a support 200, and a base 300. More specifically, the carrier 1 includes a center pin 100 that penetrates the winding center hole H1 of the electrode assembly 10 defining a core and an outer circumferential surface by winding the first and second electrodes and the separator interposed therebetween around the winding axis, and extends in a direction parallel to the winding axis of the electrode assembly 10; a support 200 located below the center pin 100 and supporting the electrode assembly 10 from below; and a base 300 located below the support 200 and including at least one pair of bearings 310 configured to be rotatable on a flat surface perpendicular to the winding axis.

The carrier 1 may support and transfer the electrode assembly 10. More specifically, the carrier 1 may support and transfer the electrode assembly 10 and the current collector 30 coupled thereto.

The base 300 may be maintained in a fixed state. At least one bearing 310 is included in the inner area of the base 300. Preferably, the base 300 may be configured to rotate the support 200. More specifically, the bearing 310 included within the base 300 may be structurally coupled to the support 200. That is, as the bearing 310 rotates inside the base 300, the support 200 connected to the bearing 310 may also rotate together. If the base 300 rotates the support 200, the electrode assembly 10 and the current collector 30 may also rotate together while the support 200 supporting and in contact with the electrode assembly 10 and the current collector 30 from below rotates. In an embodiment of the present disclosure, the bearing 310 is included in the base 300, and thus the rotation of the support 200 may be made smoother.

According to this structure, the carrier 1 may perform a taping process of the electrode assembly 10. Here, the taping process is a process of winding a tape on the electrode assembly 10, which requires a 360-degree rotation of the electrode assembly 10. In the present disclosure, since at least one pair of bearings 310 are provided in the base 300, the electrode assembly 10 mounted on the carrier 1 may be easily rotated.

In addition, according to the above structure, the carrier 1 may perform an electrode assembly 10 insertion process. For example, the carrier 1 may support the electrode assembly 10 from below. In this case, the carrier 1 may perform the insertion process by pushing the electrode assembly 10 located at the bottom upward into the battery housing 20 located at the top in a rotary equipment for inserting the electrode assembly 10 into the battery housing 20.

In addition, according to the structure of the pin carrier 1 including the bearing 310, it is possible to achieve structural simplification and process simplification compared to an insert ring carrier having a double structure. That is, the taping winding process may be successfully performed through the bearing 310 included in the carrier 1 of the present disclosure. In addition, the structure of the center pin 100 included in the carrier 1 of the present disclosure allows the process of securing the electrode assembly 10 and inserting it into the battery housing 20 to be successfully performed.

In another embodiment of the present disclosure, the carrier 1 includes no insert ring.

For example, referring to FIG. 5, it can be seen that the carrier 1 according to an embodiment of the present disclosure does not include an insert ring unlike a conventional carrier. In this regard, the conventional carrier includes an insert ring, and in the taping process, the insert ring is raised through a cylinder to wind the tape, and then the insert ring is seated to complete the process. However, in this case, it was inevitable to increase the number of equipment units required for raising or lowering the insert ring during the taping process. Accordingly, abnormal seating of the insert ring occurred when it was raised or lowered, thereby causing problems such as equipment floating or process issues. In addition, in the process of seating the insert ring inside the carrier after a 180-degree rotation of the electrode assembly 10, there was a case in which the insert ring was not seated properly. That is, the electrode assembly 10 had problems with abnormal seating, such as tilting or jamming. In addition, the insert ring inside the carrier often deviated during the rotary process, which ultimately caused issues in the process progress. Furthermore, the insert ring was an operational management point required to be managed during cleaning and wear, which was not easy in terms of operation.

Accordingly, an integrated pin carrier was applied as an alternative to the insert ring carrier in the past. However, since a pin carrier generally used for transferring raw materials with a center hole was integrated with the pin, there was a problem of being unsuitable for a winding process such as a taping process. In addition, when using an integrated pin carrier, there was a possibility of causing process and equipment issues in the rotary type taping winding process due to the lack of a rotating portion. Therefore, there is a need for a carrier 1 capable of performing a winding process without including an insert ring.

According to the carrier 1 according to an embodiment of the present disclosure, the carrier 1 does not include an insert ring. Instead, it includes a bearing 310 as a component for rotation of the electrode assembly 10, and the bearing 310 may be included inside the base 300 located below the electrode assembly 10. For example, a plurality of bearings 310 may be provided.

According to this structure, by removing the insert ring from the carrier 1, it is possible to fundamentally prevent abnormal seating of the insert ring that causes equipment floating and process issues. In addition, the problem of the insert ring deviating during the process may be fundamentally blocked.

Referring to FIG. 6, the electrode assembly 10 may have an approximately cylindrical jelly roll shape. Here, the current collector 30 may be coupled to one side of the cylinder. In the drawing of FIG. 6, the current collector 30 may be coupled to the lower surface of the electrode assembly 10. More specifically, the support portion 31 of the current collector 30 may be coupled to the bent surface where the first uncoated portion 11 of the electrode assembly 10 is bent. For example, the bent surface and the support portion 31 may be coupled by welding. Meanwhile, the tab coupling portion 32 extending from the support portion 31 may also be coupled to the bent surface. Meanwhile, the housing coupling portion 33 of the current collector 30 may extend from the support portion 31 in a direction away from the electrode assembly 10. That is, referring to FIG. 6, the housing coupling portion 33 may extend in the +X direction and in the -Z direction.

In one aspect of the present disclosure, the center pin 100 may be provided in the center of the carrier 1. The center pin 100 may have a long rod shape so that the winding center hole H1 of the electrode assembly 10 can be inserted. The diameter of the center pin 100 may be smaller than or equal to the diameter of the winding center hole H1 of the electrode assembly 10. The center pin 100 may have a shape connected to a center pillar provided in the base 300. Since the center pillar of the base 300 is fixed to the base 300, the center pin 100 may also be in a fixed state. That is, the center pin 100 may not rotate.

The center pin 100 may include a body portion 110 and an end portion 120. Referring to FIGS. 5 to 7, the body portion 110 of the center pin 100 may have a rod shape provided at the center of the carrier 1. That is, the body portion 110 may be an approximately cylindrical structure extending along the winding axis direction of the electrode assembly 10. The end portion 120 refers to an end area extending distally from the body portion 110. The end portion 120 may have a shape in which its radius decreases toward the end. That is, the center pin 100 may have a shape in which its radius decreases toward the end. For example, as can be seen in FIG. 5, the end portion 120 may have a pointed shape. According to this structure, the process of mounting the electrode assembly 10 on the center pin 100 may be facilitated. If the end portion 120 of the center pin 100 is blunt or has the same radius as the body portion 110, the radius difference from the winding center hole H1 of the electrode assembly 10 is not large, and thus the area around the winding center hole H1 of the electrode assembly 10 is more likely to be damaged by the center pin 100 in the event of a small error. Therefore, the end portion 120 preferably has a shape in which its radius decreases toward the end.

Meanwhile, referring to FIG. 7, the length of the center pin 100 may be configured to be smaller than or equal to the length of the electrode assembly 10 in the winding axis direction.

If the length of the center pin 100 is longer than the length of the electrode assembly 10 in the winding axis direction, when the electrode assembly 10 is inserted into the battery housing 20, it becomes impossible for the electrode assembly 10 to be completely inserted to the bottom surface of the battery housing 20. Therefore, the length of the center pin 100 is preferably configured to be smaller than or equal to the length of the electrode assembly 10 in the winding axis direction.

Referring to FIGS. 7 and 8, the support 200 may include a support surface 210 and a support body 220. The support 200 may support the current collector 30 coupled to one side of the electrode assembly 10. More specifically, the support surface 210 may support the current collector 30. The support body 220 refers to a body part of the support 200 extending downward from the support surface 210. Referring to FIGS. 7 and 8, the support body 220 has a shape extending downward from the support surface 210 and has a shape in which its radius gradually or gradationally increases as it extends downward. That is, the support 200 may be configured such that its radius increases as it moves away from the electrode assembly 10.

For example, referring to FIG. 7, the housing coupling portion 33 of the current collector 30 may have a unilaterally convex structure based on an imaginary straight line connecting a connection point between the contact portion 33a and the connection portion 33b and a connection point between the connection portion 33b and the tab coupling portion 32, that is, an imaginary straight line connecting both ends of the connection portion 33b in the length direction. When explained referring to the coordinate system of FIG. 7, the housing coupling portion 33 may have a convex structure in the -Z direction based on an imaginary straight line connecting a connection point between the contact portion 33a and the connection portion 33b and a connection point between the connection portion 33b and the tab coupling portion 32, that is, an imaginary straight line connecting both ends of the connection portion 33b in the length direction. For example, the housing coupling portion 33 of the current collector 30 in FIG. 7 may be bent once at the connection point between the contact portion 33a and the connection portion 33b, and once within the area of the connection portion 33b. Here, all the bent angles may be obtuse angles. That is, the connection portion 33b may have a shape in which its slope gradationally or gradually decreases toward the contact portion 33a. That is, the housing coupling portion 33 may have a shape in which the length measured from the winding axis to the housing coupling portion 33 in the horizontal direction gradually increases. In other words, the radius measured in the horizontal direction from the winding axis of the housing coupling portion 33 may gradually increase as it moves away from the electrode assembly 10.

Meanwhile, the support portion 31 supports the current collector 30 having this shape from below. Therefore, it is preferable that the support portion 31 has a shape corresponding to the shape of the current collector 30. For example, the shape of the support 200 may be configured such that its radius increases as it moves away from the electrode assembly 10, which may roughly correspond to a shape in which the radius of the housing coupling portion 33 measured in the horizontal direction from the winding axis gradually increases as it moves away from the electrode assembly 10. More specifically, the support body 220 of the support 200 may have an approximately conical shape in which its radius increases as it moves away from the electrode assembly 10. However, the support 200 may have a conical shape cut by the approximately flat support surface 210.

According to this structure, the housing coupling portion 33 may be supported and protected by the support 200. That is, since the support 200 having a shape roughly similar to the shape of the housing coupling portion 33 contacts the housing coupling portion 33 in some areas and supports the housing coupling portion 33, the housing coupling portion 33 that is not yet coupled to the battery housing 20 and thus in an unstable state may be prevented from being damaged by other components.

In a more preferred embodiment, the shape of the support 200 may be configured to match the shape of the connection portion 33b of the current collector 30. In this case, the shape of the support body 220 of the support 200 matches the shape of the housing coupling portion 33 of the current collector 30, particularly the shape of the connection portion 33b, so that all points of the connection portion 33b may be contacted and supported by the support 200. Accordingly, the support and protection effects of the housing coupling portion 33 may be further improved.

In another aspect of the present disclosure, the diameter of the support 200 may be configured to be larger than the diameter of the winding center hole H1 provided in the core of the electrode assembly 10. More specifically, the diameter of the support surface 210 may be configured to be larger than the diameter of the winding center hole H1 provided in the core of the electrode assembly 10. Accordingly, the electrode assembly 10 may be completely supported on the flat surface of the support 200. If the winding center hole H1 of the electrode assembly 10 is larger than the diameter of the support surface 210, there is a possibility that the winding area on the outer circumferential side of the electrode assembly 10 may flow downward along the inclined surface of the support body 220. Therefore, the diameter of the support 200 is preferably configured to be larger than the diameter of the winding center hole H1 provided in the core of the electrode assembly 10.

In the same intent, the diameter of the support 200 may be configured to be larger than the diameter of the current collector hole H2 formed in the center of the current collector 30. More specifically, the diameter of the support surface 210 may be configured to be larger than the diameter of the current collector hole H2 formed in the center of the current collector 30. Accordingly, the current collector 30 may be completely supported on the flat surface of the support 200. More specifically, accordingly, the support portion 31 of the current collector 30 may be completely supported on the flat surface of the support 200. If the winding center hole H1 of the electrode assembly 10 is larger than the diameter of the support surface 210, there is a possibility that the winding area on the inner circumferential side of the electrode assembly 10 may protrude upward by the shape of the support 200 along the inclined surface of the support body 220. Therefore, the diameter of the support 200 is preferably configured to be larger than the diameter of the current collector hole H2 formed in the center of the current collector 30.

Meanwhile, the support 200 may be in direct contact with the current collector 30. When the support 200 and the current collector 30 are in contact with each other, they do not slip by friction. Therefore, when the support 200 rotates, the current collector 30 in contact with the support 200 may also rotate together.

In another aspect of the present disclosure, the radius of the support surface 210 may be smaller than or equal to the radius of the support portion 31 of the current collector 30. Referring to FIG. 8, it can be seen that the radius of the support surface 210 is the same as the radius of the support portion 31 of the current collector 30. Here, the radius of the support portion 31 refers to the distance from the winding axis to the point where the support portion 31 is bent downward.

According to this structure, the contact area between the current collector 30 and the support 200 may be maximized. Accordingly, the anti-slip effect during rotation of the electrode assembly 10 and the current collector 30 may be improved. In addition, according to the structure in which the radius of the support surface 210 is the same as the radius of the support portion 31 of the current collector 30, the area where the current collector 30 contacts the support 200 is enlarged, and thus the support and protection effects of the current collector 30 may be further improved.

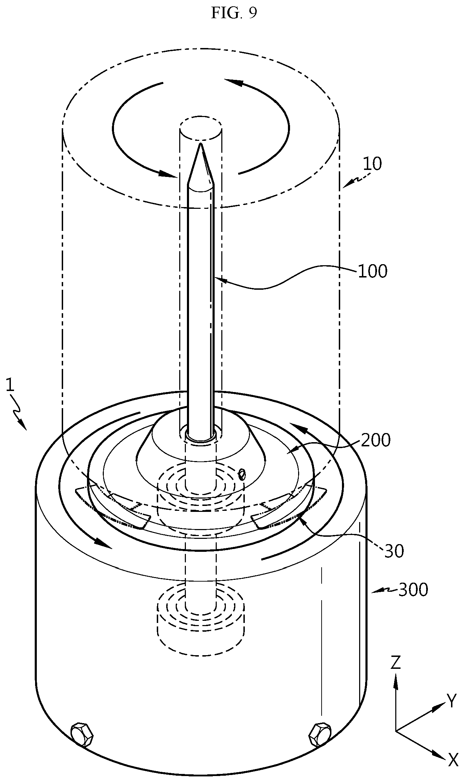

FIG. 9 is a view for describing how a carrier 1 according to an embodiment of the present disclosure rotates an electrode assembly 10 and a current collector 30.

Referring to FIG. 9, the electrode assembly 10 and the current collector 30 coupled thereto may be inserted into the center pin 100 of the carrier 1. More specifically, the center pin 100 may be inserted into the winding center hole H1 of the electrode assembly 10 and the current collector hole H2 of the current collector 30. In this case, the electrode assembly 10 and the current collector 30 may be mounted on the center pin 100 while the current collector 30 is located on the lower surface of the electrode assembly 10. As a result, the support portion 31 of the current collector 30 may contact the support surface 210 of the support 200. Meanwhile, the support 200 is structurally connected to the bearing 310 included inside the base 300. Therefore, when the bearing 310 included inside the base 300 rotates in the direction of the arrow in FIG. 9, the support 200 connected to the bearing 310 may also rotate in the direction of the arrow. Accordingly, the current collector 30 in direct contact with the support 200 may also rotate in the direction of the arrow. Ultimately, the electrode assembly 10 coupled to the current collector 30 may also rotate in the direction of the arrow. Meanwhile, although not shown in the drawings, the rotation of the bearing 310 may be performed by a separate power driving source.

According to the above-described embodiment of the present disclosure, the support and rotation process of the electrode assembly 10 is made possible by the carrier 1 that does not include an insert ring. **In** addition, the taping process may be performed smoothly by the structure including the bearing 310 inside the base 300 of the carrier 1. Ultimately, the insert ring is not required during the rotation process when the electrode assembly 10 is inserted into the battery housing 20. Accordingly, it is possible to fundamentally prevent the problem of tilting the electrode assembly 10 due to abnormal seating of the insert ring during transfer of the electrode assembly 10 and seating of the insert ring. Furthermore, equipment design and structural simplification may be achieved by removing the insert ring, and operational management points may be eliminated. In addition, by allowing the carrier 1 to rotate smoothly through the addition of the bearing 310, it is possible to eliminate the cause of issues related to the winding progress of the taping process.

### [Explanation of Reference Signs]

B: battery cell
10: electrode assembly
11: uncoated portion
12: second uncoated portion
H1: winding center hole
20: battery housing
21: beading portion
22: clamping portion
30: current collector
31: support portion
32: tab coupling portion
33: housing coupling portion
33a: contact potion
33b: connection portion
H2: current collector hole
1: carrier
100: center pin
110: body portion
120: end portion
200: support
210: support surface
220: support body
300: base
310: bearing

## Claims

1. A carrier (1), comprising:
a center pin (100) configured to penetrate the winding center hole (H1) of an electrode assembly (10) defining a core and an outer circumferential surface by winding the first and second electrodes and the separator interposed therebetween around a winding axis, and extends in a direction parallel to the winding axis of the electrode assembly (10);
a support (200) located below the center pin (100) and configured to support the electrode assembly (10) from below; and
a base located below the support (200) and comprising at least one pair of bearings (310) configured to be rotatable on a flat surface perpendicular to the winding axis.

2. The carrier (1) according to claim 1, wherein the base is configured to rotate the support (200).

3. The carrier (1) according to claim 1, comprising no insert ring.

4. The carrier (1) according to claim 1, wherein the length of the center pin (100) is smaller than or equal to the length of the electrode assembly (10) in the winding axis direction.

5. The carrier (1) according to claim 1, wherein the center pin (100) has a shape in which its radius decreases toward the end.

6. The carrier (1) according to claim 1, wherein the support (200) is configured to support a current collector (30) coupled to one side of the electrode assembly (10).

7. The carrier (1) according to claim 6, wherein the current collector comprises:
a support portion (31) configured to be disposed on one side of the electrode assembly (10);
a tab coupling portion (32) extending from the support (200) portion and configured to be coupled to a first uncoated portion (11) of the electrode assembly (10); and
a housing coupling portion (33) extending from the support portion (31) and configured to be electrically coupled to the inner surface of a battery housing (20).

8. The carrier (1) according to claim 7, wherein the housing coupling portion (33) comprises:
a contact portion (33a) coupled to the inner surface of the battery housing (20); and
a connection portion (33b) connecting the support portion (31) and the contact portion (33a).

9. The carrier (1) according to claim 8, wherein the connection portion has a unilaterally convex structure based on an imaginary straight line connecting both ends of the connection portion (33b) in the length direction.

10. The carrier (1) according to claim 8, wherein the connection portion has a shape in which its slope gradationally or gradually decreases toward the contact portion (33a).

11. The carrier (1) according to claim 1, wherein the support (200) is configured such that its radius increases as it moves away from the electrode assembly (10).

12. The carrier (1) according to claim 8, wherein the shape of the support (200) is configured to match the shape of the connection portion (33b) of the current collector (30).

13. The carrier (1) according to claim 1, wherein the diameter of the support (200) is larger than the diameter of the winding center hole (H1) provided in the core of the electrode assembly (10).

14. The carrier (1) according to claim 6, wherein the diameter of the support (200) is larger than the diameter of the current collector hole (H2) formed in the center of the current collector (30).

## Patentansprüche

1. Träger (1) aufweisend:
einen Mittelstift (100), der so konfiguriert ist, dass er durch das Wicklungsmittelloch (H1) einer Elektrodenanordnung (10), welche einen Kern und eine äußere Umfangsfläche definiert, indem die erste Elektrode und die zweite Elektrode und der dazwischen angeordnete Separator um eine Wicklungsachse gewickelt sind, hindurch verläuft und sich in einer Richtung parallel zur Wicklungsachse der Elektrodenanordnung (10) erstreckt;
eine Stütze (200), die sich unterhalb des Mittelstifts (100) befindet und so konfiguriert ist, dass er die Elektrodenanordnung (10) von unten stützt; und
eine Basis, die sich unterhalb der Stütze (200) befindet und mindestens ein Paar Lager (310) aufweist, die so konfiguriert sind, dass sie auf einer flachen Oberfläche senkrecht zur Wicklungsachse drehbar sind.

2. Träger (1) nach Anspruch 1, wobei die Basis so konfiguriert ist, dass sie die Stütze (200) dreht.

3. Träger (1) nach Anspruch 1, der keinen Einsatzring aufweist.

4. Träger (1) nach Anspruch 1, wobei die Länge des Mittelstifts (100) kleiner oder gleich der Länge der Elektrodenanordnung (10) in der Wicklungsachsenrichtung ist.

5. Träger (1) nach Anspruch 1, wobei der Mittelstift (100) eine Form aufweist, in der sein Radius zum Ende hin abnimmt.

6. Träger (1) nach Anspruch 1, wobei die Stütze (200) so konfiguriert ist, dass sie einen Stromabnehmer (30) stützt, der mit einer Seite der Elektrodenanordnung (10) gekoppelt ist.

7. Träger (1) nach Anspruch 6, wobei der Stromabnehmer aufweist:
einen Stützabschnitt (31), der so konfiguriert ist, dass er auf einer Seite der Elektrodenanordnung (10) angeordnet ist;
einen Laschenkopplungsabschnitt (32), der sich von dem Stützabschnitt (200) erstreckt und so konfiguriert ist, dass er mit einem ersten unbeschichteten Abschnitt (11) der Elektrodenanordnung (10) gekoppelt ist; und
einen Gehäusekopplungsabschnitt (33), der sich von dem Stützabschnitt (31) erstreckt und so konfiguriert ist, dass er elektrisch mit der Innenfläche eines Batteriegehäuses (20) gekoppelt ist.

8. Träger (1) nach Anspruch 7, wobei der Gehäusekopplungsabschnitt (33) aufweist:
einen Kontaktabschnitt (33a), der mit der Innenfläche des Batteriegehäuses (20) gekoppelt ist; und
einen Verbindungsabschnitt (33b), der den Stützabschnitt (31) und den Kontaktabschnitt (33a) verbindet.

9. Träger (1) nach Anspruch 8, wobei der Verbindungsabschnitt eine einseitig konvexe Struktur aufweist, die auf einer imaginären geraden Linie basiert, die beide Enden des Verbindungsabschnitts (33b) in der Längsrichtung verbindet.

10. Träger (1) nach Anspruch 8, wobei der Verbindungsabschnitt eine Form aufweist, in der seine Neigung zum Kontaktabschnitt (33a) hin stufenweise oder allmählich abnimmt.

11. Träger (1) nach Anspruch 1, wobei die Stütze (200) so konfiguriert ist, dass ihr Radius in einer Richtung von der Elektrodenanordnung (10) weg zunimmt.

12. Träger (1) nach Anspruch 8, wobei die Form der Stütze (200) so konfiguriert ist, dass sie der Form des Verbindungsabschnitts (33b) des Stromabnehmers (30) entspricht.

13. Träger (1) nach Anspruch 1, wobei der Durchmesser der Stütze (200) größer ist als der Durchmesser des Wicklungsmittellochs (H1), das im Kern der Elektrodenanordnung (10) gebildet ist.

14. Träger (1) nach Anspruch 6, wobei der Durchmesser der Stütze (200) größer ist als der Durchmesser des Stromabnehmerlochs (H2), das in der Mitte des Stromabnehmers (30) gebildet ist.

## Revendications

1. Support (1), comprenant :
un axe central (100) configuré pour pénétrer dans l'orifice central d'enroulement (H1) d'un ensemble d'électrodes (10) définissant un noyau et une surface circonférentielle extérieure en enroulant les première et deuxième électrodes, et le séparateur intercalé entre elles, autour d'un axe d'enroulement, et s'étendant dans une direction parallèle à l'axe d'enroulement de l'ensemble d'électrodes (10) ;
un appui (200) situé au-dessous de l'axe central (100), et configuré pour soutenir l'ensemble d'électrodes (10) du dessous ; et
un socle situé sous l'appui (200) et comprenant au moins une paire de paliers (310) configurés pour pouvoir tourner sur une surface plate perpendiculaire à l'axe d'enroulement.

2. Support (1) selon la revendication 1, le socle étant configuré pour faire tourner l'appui (200).

3. Support (1) selon la revendication 1, ne comprenant pas de bague d'insertion.

4. Support (1) selon la revendication 1, la longueur de l'axe central (100) étant inférieure ou égale à la longueur de l'ensemble d'électrodes (10) dans le sens de l'axe d'enroulement.

5. Support (1) selon la revendication 1, la forme de l'axe central (100) présentant une diminution de son rayon vers le bout.

6. Support (1) selon la revendication 1, l'appui (200) étant configuré pour soutenir un collecteur de courant (30) couplé à un côté de l'ensemble d'électrodes (10).

7. Support (1) selon la revendication 6, le collecteur de courant comprenant :
une partie de soutien (31) configurée pour être disposée sur un côté de l'ensemble d'électrodes (10) ;
une partie de couplage de languette (32) s'étendant de la partie du support (200) et configurée pour être couplée à une première partie découplée (11) de l'ensemble d'électrodes (10) ; et
une partie de couplage du boîtier (33) s'étendant de la partie de soutien (31), et configurée pour être couplée électriquement à la surface intérieure d'un boîtier de batterie (20).

8. Support (1) selon la revendication 7, la partie de couplage du boîtier (33) comprenant :
une partie de contact (33a) coupée à la surface intérieure du boîtier de batterie (20) ; et
une partie de connexion (33b) connectant la partie de soutien (31) à la partie de contact (33a).

9. Support (1) selon la revendication 8, la partie de connexion possédant une structure unilatéralement convexe basée sur une ligne droite imaginaire raccordant les deux bouts de la partie de connexion (33b) dans le sens de la longueur.

10. Support (1) selon la revendication 8, la partie de connexion possédant une forme présentant une diminution progressive ou graduelle de sa pente vers la partie de contact (33a).

11. Support (1) selon la revendication 1, l'appui (200) étant configuré de sorte que son rayon augmente au fur et à mesure qu'il s'éloigne de l'ensemble d'électrodes (10).

12. Support (1) selon la revendication 8, la forme de l'appui (200) étant configurée de façon à ce qu'elle corresponde à la forme de la partie de connexion (33b) du collecteur de courant (30).

13. Support (1) selon la revendication 1, le diamètre de l'appui (200) étant supérieur au diamètre de l'orifice du centre d'enroulement (H1) agencé dans le noyau de l'ensemble d'électrodes (10).

14. Support (1) selon la revendication 6, le diamètre de l'appui (200) étant supérieur au diamètre de l'orifice du collecteur de courant (H2) formé au centre du collecteur de courant (30).
